# EUROPÄISCHE PATENTSCHRIFT

(11) **EP 1 446 314 B1**
(45) Veröffentlichungstag und Bekanntmachung des Hinweises auf die Patenterteilung: **20.02.2008**
(21) Anmeldenummer: 02791670.9
(22) Anmeldetag: 11.11.2002
(51) Int. Cl.: B60T 17/08, B60T 17/10

(54) **BREMSANLAGE FÜR EIN KRAFTFAHRZEUG**
BRAKE SYSTEM FOR A MOTOR VEHICLE
SYSTEME DE FREINAGE POUR VEHICULE AUTOMOBILE

(30) Priorität: 14.11.2001 DE 10155952
(43) Veröffentlichungstag der Anmeldung: 18.08.2004
(73) Patentinhaber: KNORR-BREMSE SYSTEME FÜR NUTZFAHRZEUGE GMBH, 80809 München (DE)
(72) Erfinder: HERGES, Michael, 70825 Korntal-Münchingen (DE)
(74) Vertreter: Schönmann, Kurt
(86) Internationale Anmeldenummer: PCT/EP2002/012571
(87) Internationale Veröffentlichungsnummer: WO 2003/042020

(56) Entgegenhaltungen:
- EP-A- 1 069 016
- DE-A- 19 923 455
- US-A- 5 700 063

## Beschreibung

Die Erfindung betrifft eine Bremsanlage für ein Kraftfahrzeug, insbesondere einen Lastkraftwagen, wobei den Vorder- und Hinterrädern des Kraftfahrzeugs jeweils eine Bremseinrichtung zugeordnet ist. Die Erfindung betrifft ferner ein Kraftfahrzeug und die Verwendung einer Zusatzbremseinrichtung in einer Bremsanlage für ein Kraftfahrzeug, insbesondere einen Lastkraftwagen, mit Bremseinrichtungen für Vorder- und Hinterräder des Kraftfahrzeugs.

Das Dokument US 5700073 offenbart die Merkmale des Oberbegriff des Anspruchs 1 und es wird als nächsligender Stand der Technik augesehen.

Derartige Bremsanlagen finden üblicherweise Verwendung bei Lastkraftwagen. Bei Ausfall eines Vorderachsbetriebsbremskreises gibt es Schwierigkeiten insbesondere für die Erfüllung der Vorschriften bezüglich einer sog. Secondary Brake Performance, vor allem bei leeren Sattelzugmaschinen. Viele Sattelzugmaschinen haben konstruktionsbedingt z.B. bei Solobetrieb so wenig Hinterachslast, daß die allein mit der Hinterachse erreichbare Bremsverzögerung nicht ausreichend ist. Die Achslast der Hinterachsen reicht bei bestimmten Sattelzugmaschinen, bei denen z.B. der Schwerpunkt sehr weit vorne liegt, nicht aus, um genügend Bremskraft zur Erreichung einer Hilfsbremswirkung durch die Hinterachse aufzubringen, da durch die dynamische Achslastverlagerung beim Bremsen die Entlastung der Hinterachse gerade dies verhindert. Daher hat man vorgesehen, daß die als Hilfsbremskreis vorgesehene Bremse, d.h. jeder der beiden Betriebsbremskreise oder die Feststellbremse, zumindest im begrenzten Maße auf die Vorderachse wirken soll.

Um diesem Problem zu entgehen und weiterhin eine ausreichende Bremsfunktion insbesondere bei Notbremsfällen zu ermöglichen, gibt es im Stand der Technik zwei Lösungsvorschläge.

Der erste Lösungsvorschlag verwendet Federspeicherbremszylinder an jeder Bremse der Vorderachse. Durch entsprechende Aktivierung der Feststellbremse als Hilfsbremse kann die Forderung einer Secondary Brake Performance erfüllt werden. Da dann jedoch alle Räder des Fahrzeugs bei eingelegter Feststellbremse fest mit der Achse verblockt sind, kann dies beim Heben und Senken des Aufbaus mittels Luftfederung zu Verspannungen im stehenden Fahrzeug führen. In diesem Fall müssen aufwendige Maßnahmen zum Lösen der Federspeicher ergriffen werden. Diese Lösung erfordert weitere umfangreiche Zusatzausrüstungen, um ein Verspannen von Fahrzeugen zu vermeiden, die mit Luftfederung ausgerüstet sind, falls eine Niveauverstellung aufgetreten ist. Diese Zusatzausrüstungen sind mit sehr hohen Kosten verbunden.

Darüber hinaus bestehen auch Probleme beim Einbau der beiden großen Federspeicherbremszylinder an der Vorderachse, da der Einbauraum hierfür eng bemessen ist.

Eine zweite Lösung sieht vor, den Betriebsbremskreis der Hinterachse als Hilfsbremse zu verwenden. Hierbei wird Luft vom Betriebsbremskreis der Hinterachse mit reduziertem Druck zu einem Bremszylinder der Vorderachse geführt, wenn der Vorderachskreis ausgefallen ist. Ein derartiges Notbremsventil hat aufgrund der notwendigen Drosselwirkung des Ventils allerdings einen negativen Einfluß auf die Schwell- und Lösezeiten des Betriebsbremssystems und auf die für die ABS-Funktion wichtigen Druckabbau-Gradienten, sofern der ABS-Druckabbau mit Steuereinrichtungen vorgenommen wird, die auf der Eingangsseite des Notbremsventils angebracht sind. Das Notbremsventil benötigt einen relativ großen Einbauraum und relativ viel Einbauaufwand, so daß die Verwendung eines derartigen Notbremsventils im Lastkraftwagen zu erhöhten Kosten führt. Im übrigen ist ein zusätzliches und recht aufwendiges Ventil mit Kreistrennung und Druckreduzierung erforderlich. Im ABS-Fall ist außerdem eine spezielle Sperrvorrichtung nötig, falls eine einkanalige ABS-Ausrüstung an der Vorderachse verwendet wird.

Ausgehend von diesem Stand der Technik liegt der Erfindung die Aufgabe zugrunde, eine Bremsanlage zu schaffen, die ein Abbremsen eines Fahrzeuges auch bei Ausfall des Vorderachsbetriebsbremskreises ermöglicht. Die Lösung soll hierbei relativ kostengünstig sein und wenig Einbauaufwand erfordern.

Gelöst wird diese Aufgabe durch die kennzeichnenden Merkmale des Anspruchs 1. Vorteilhafte Ausgestaltungen der Erfindung sind in den Unteransprüchen beschrieben.

Die erfindungsgemäße Lösung für die Bremsanlage sieht vor, daß ausschließlich nur eine von den Bremseinrichtungen der Vorderräder eine Zusatzbremseinrichtung aufweist und die Zusatzbremseinrichtung als Federspeicherbremszylinder ausgebildet ist. Die Zusatzbremseinrichtung ist aktivierbar im Notfall und sorgt für eine Bremsverzögerung in einem derartigen Fall. Durch die Verwendung nur einer zusätzlichen Bremseinrichtung werden auch Kosten eingespart. Außerdem sind die Einbaumaßnahmen für nur eine Zusatzbremseinrichtung wesentlich geringer. Der Federspeicherbremszylinder ist mit zwei Kammern versehen, wobei die erste Kammer eine normale Betriebsbremsfunktion hat. Die zweite Kammer, deren Kolben kleiner ist und damit eine geringe Bremskraft ausübt, wird im Notfall, d.h. bei Ausfall der ersten Kammer mit dem Betriebsbremsdruck der Hinterachse beaufschlagt. Die Hilfsbremswirkung der Zusatzbremseinrichtung erfolgt über den Federspeicherdruckkreis der Hinterachse.

Vorteilhaft ist es weiterhin, wenn die Bremseinrichtungen der Hinterräder jeweils wenigstens eine Hilfsbremseinrichtung aufweisen, die im Falle des Ausfalls des Vorderachsbetriebsbremskreises ergänzend ein Abbremsen des Fahrzeuges herbeiführen.

In einer Weiterbildung der Erfindung ist die Zusatzbremseinrichtung in Wirkverbindung mit wenigstens einer Hilfsbremseinrichtung, so daß durch eine Koordination der Zusatzbremseinrichtung und wenigstens der einen Hilfsbremseinrichtung ein gezieltes Abbremsen des Fahrzeugs erzielt werden kann.

Besonders vorteilhaft ist es, wenn die Wirkverbindung derart ausgebildet ist, daß die Bremswirkung der Zusatzbremseinrichtung zeitlich vor der Bremswirkung wenigstens einer Hilfsbremseinrichtung einsetzt, um ein Blockieren der Hinterachse zu verhindern.

Außerdem ist in einer vorzugswürdigen Ausführung der Erfindung vorgesehen, daß die Zusatzbremseinrichtung in der Bremswirkung geringer ist als eine Hilfsbremseinrichtung oder geringer ist als die gesamte Bremswirkung mehrerer Hilfsbremseinrichtungen. Durch den Einsatz einer schwächeren Zusatzbremseinrichtung ist es möglich, daß das Giermoment des Kraftfahrzeugs in tolerierbaren Grenzen gehalten werden kann, wobei jedoch genügend zusätzliche Bremskraft erzeugt wird, um eine Hilfsbremswirkung zu erzielen.

Ebenso ist es vorzugswürdig, wenn die Bremseinrichtungen der Vorder- und Hinterräder jeweils mittels eines Bremskreises unabhängig voneinander betätigbar sind.

Im weiteren ist es vorteilhaft, wenn die Bremseinrichtung der Hinterräder und ihre jeweilige Hilfsbremseinrichtung als Federspeicherbremszylinder ausgebildet ist.

Die Erfindung wird auch gelöst durch ein Kraftfahrzeug, insbesondere einen Lastkraftwagen, mit einer vorstehend beschriebenen erfindungsgemäßen Bremsanlage.

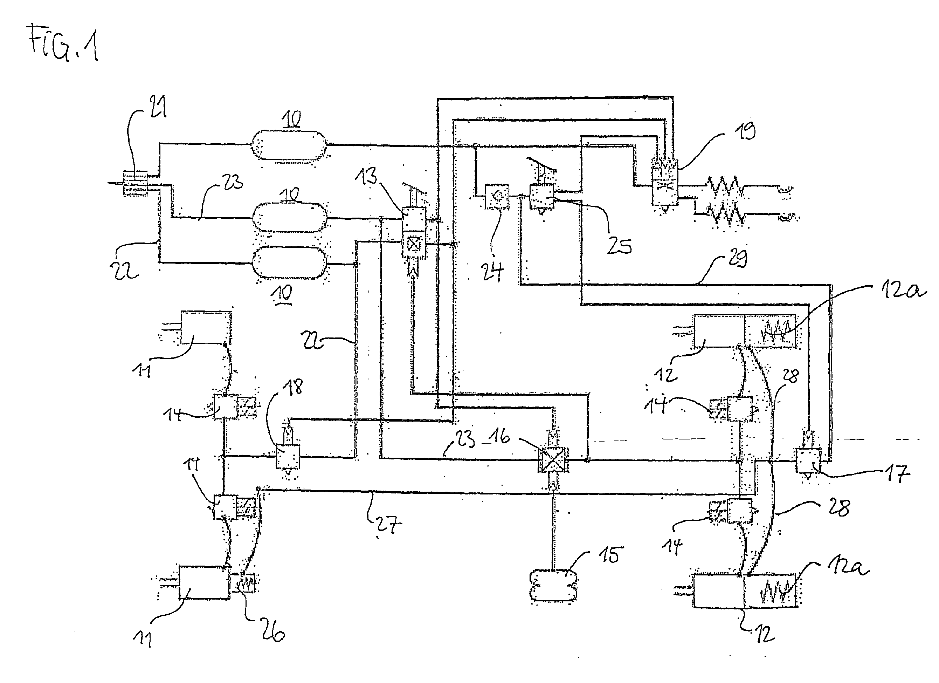

Die Erfindung wird im folgenden anhand eines Ausführungseispiels unter Bezugnahme auf die Zeichnung Fig. 1 und ohne Beschränkung des allgemeinen Erfindungsgedanken beschrieben, auf die im übrigen bezüglich der im Text nicht näher erläuterten erfindungsgemäßen Einzelheiten ausdrücklich verwiesen wird.

Fig. 1 zeigt einen schematischen Aufbau einer Bremsanlage gem. der Erfindung.

Die Bremsanlage verfügt über einen Vorderachsbremskreis 22, einen Hinterachsbremskreis 23 sowie einen weiteren Bremskreis, nämlich einen Feststellbremskreis. Ferner ist die Bremsanlage 1 so ausgebildet, daß insbesondere die Bremsanlage in einem Anhänger über ein AnhängerSteuerventil 19 angesteuert werden kann.

Für die verschiedenen Bremskreise wird Druckluft von üblichen Druckluftaufbereitungsanlagen umfassend einen Kompressor über ein Vierkreis-Schutzventil 21 zu Luftbehältern 10 geführt. Über ein Betriebs-Bremsventil 13 werden die weiteren Bremselemente in den Bremskreisen 22, 23 gesteuert.

Bei der Hinterachse sorgen jeweils ein Drucksteuerventil 14 für die Beschickung des Betriebsbremskreises der beiden Bremszylinder 12 der Hinterachse mit Druckluft. Die Bremszylinder 12 der Hinterräder sind kombiniert mit jeweils einer Federspeicherbremse 12a. Derartige Bremsen für die Hinterräder sind allgemein als Federspeicher-Bremszylinder bekannt.

Im Bremskreis 22 der Vorderachse ist ein Relais-Ventil 18 vorgesehen, das den Druck, der in den Bremszylindern 11 der Vorderachse zur Verfügung gestellt wird, über Drucksteuerventile 14 steuert. Im Falle von zum Blokkieren neigenden Rädern kann der Druck in den Bremszylindern mit den Drucksteuerventilen 14 abgesenkt werden (ABS-Funktion).

Der Hinterachsbremskreis 23 verfügt darüber hinaus über eine automatische lastabhängige Bremskraftsteuerung 16, an die ein Luftbalg 15 angeschlossen ist.

Um bei einem Ausfall des Vorderachsbetriebsbremskreises 22 noch für eine ausreichende Bremswirkung an den Vorderachsen zu sorgen, ist nur an einem der Bremszylinder 11 der Vorderachse eine zusätzliche Federspeicherbremse als Zusatzbremseinrichtung 26 ausgebildet. Diese zusätzliche Federspeicherbremse 26 wird über Verbindungsleitungen 27 und mittels eines Relais-Ventils 17 und eines Betätigungsventils 25 mit Druckluft versorgt. Das Betätigungsventil 25 ist über ein Rückschlagventil 24 mit dem Luftbehälter 10 verbunden.

Die gespeicherte Federkraft der als Hilfsbremseinrichtung ausgebildeten zusätzlichen Federspeicherbremse 26 wird durch Entlüftung der Federspeicherbremse 26 an nur einem Bremszylinder 11 des Vorderachsbremskreises 22 wirksam.

Die Bremswirkung des zusätzlichen Federspeichers 26 setzt zusätzlich zu den Federspeichern 12a der Kombibremszylinder 12 der Hinterräder ein. Bevorzugterweise bremst die Federspeicherbremse 26 die Vorderräder zeitlich vor dem Einsetzen der Bremswirkung durch die Hilfsbremseinrichtungen 12a der Hinterräder.

Außerdem ist die Bremswirkung der zusätzlichen Federspeicherbremse 26 so dimensioniert, daß deren Bremswirkung geringer ist als die Bremswirkung eines einzelnen Federspeichers 12a bzw. die Kombination der beiden Hilfsbremseinrichtungen 12a an den Hinterrädern. Hierdurch ist es möglich, das Giermoment des Fahrzeuges durch die schwächere Feder in der Zusatz-Bremseinrichtung 26 in tolerierbaren Grenzen zu halten. Dennoch wird genügend zusätzliche Bremskraft hierdurch erzeugt, so daß die Hilfsbremswirkung hierdurch erzielt wird. Durch das frühere Einsetzen der Bremsung kann ein Blockieren der Hinterachse vor oder bei Erreichung der Hilfsbremswirkung umgangen werden.

Insgesamt ergeben sich durch den Gegenstand der Erfindung die Vorteile, daß weniger Kosten durch Einsparung des zweiten Federspeichen-Bremszylinders und die schwächere Auslegung der zusätzlichen Bremseinrichtung entstehen. Zudem wird der Einbau erleichtert, da durch die schwächere Feder für den Federspeicher-Bremszylinder ein kleinerer Bauraum benötigt wird.

### Bezugszeichenliste:

- 1: Bremsanlage
- 10: Luftbehälter
- 11: Bremszylinder
- 12: Kombibremszylinder
- 12a: Hilfsbremseinrichtung / Federspeicherbremse
- 13: Betriebsbremsventil
- 14: Drucksteuerventil
- 15: Luftbalg
- 16: automatisch belastbare Bremskraftsteuerung
- 17: Relais-Ventil
- 18: Relais-Ventil
- 19: Anhängersteuerventil
- 21: Vierkreis-Schutzventil
- 22: Vorderachs-Bremskreis
- 23: Hinterachs-Bremskreis
- 24: Rückschlagventil
- 25: Betätigungsventil (Handbremse)
- 26: Federspeicherbremse
- 27: Verbindungsleitung
- 28: Verbindungsleitung
- 29: Verbindungsleitung

## Patentansprüche

1. Bremsanlage (1) für ein Kraftfahrzeug, insbesondere einen Lastkraftwagen, wobei den Vorder- und Hinterrädern des Kraftfahrzeugs jeweils eine Bremseinrichtung (11, 12) zugeordnet ist, **dadurch gekennzeichnet, daß** ausschließlich nur eine von den vorderrädrigen Bremseinrichtungen (11) eine Zusatzbremseinrichtung (26) aufweist, und daß die Zusatzbremseinrichtung (26) als Federspeicherbremszylinder ausgebildet ist.

2. Bremsanlage (1) nach Anspruch 1, **dadurch gekennzeichnet, daß** die hinterrädrigen Bremseinrichtungen (12) wenigstens eine Hilfsbremseinrichtung (12a) aufweisen.

3. Bremsanlage (1) nach Anspruch 2, **dadurch gekennzeichnet, daß** die Zusatzbremseinrichtung (26) und wenigstens eine Hilfsbremseinrichtung (12a) in Wirkverbindung miteinander sind.

4. Bremsanlage (1) nach Anspruch 3, **dadurch gekennzeichnet, daß** die Wirkverbindung derart ausgebildet ist, daß die Bremswirkung der Zusatzbremseinrichtung (26) zeitlich vor den Bremswirkungen der Hilfsbremseinrichtungen (12a) eintritt.

5. Bremsanlage (1) nach Anspruch 3 oder 4, **dadurch gekennzeichnet, daß** die Bremswirkung der Zusatzbremseinrichtung (26) geringer ist als die Bremswirkung wenigstens einer Hilfsbremseinrichtung (12a) bzw. der Hilfsbremseinrichtungen (12a).

6. Bremsanlage (1) nach einem der Ansprüche 1 bis 5, **dadurch gekennzeichnet, daß** die vorderrädrigen und die hinterrädrigen Bremseinrichtungen (11, 12) jeweils mittels eines Bremskreises (22, 23) betätigbar sind.

7. Bremsanlage (1) nach einem der Ansprüche 2 bis 6, **dadurch gekennzeichnet, daß** die hinterrädrigen Bremseinrichtungen (12) und die jeweilige Hilfsbremseinrichtung (12a) als Federspeicherbremszylinder ausgebildet sind.

8. Kraftfahrzeug, insbesondere Lastkraftwagen, mit einer Bremsanlage (1) nach einem oder mehreren der Ansprüche 1 bis 7.

## Claims

1. Brake system (1) for a motor vehicle, in particular a truck, wherein a respective brake device (11, 12) is associated with the front and rear wheels of the motor vehicle, **characterised in that** only one of said front-wheel brake devices (11) exclusively includes a supplementary brake device (26) and that said supplementary brake device (26) is configured as spring-loaded brake actuator.

2. Brake system (1) according to Claim 1, **characterised in that** said rear-wheel brake devices (12) comprise at least one auxiliary brake device (12a).

3. Brake system (1) according to Claim 2, **characterised in that** said supplementary brake device (26) and at least one auxiliary brake device (12a) are operatively connected to each other.

4. Brake system (1) according to Claim 3, **characterised in that** said operative connection is so configured that the braking effect produced by said supplementary brake device (26) occurs at a point of time before the occurrence of the braking effects produced by said auxiliary brake devices (12a).

5. Brake system (1) according to Claim 3 or 4, **characterised in that** the braking effect produced by said supplementary brake device (26) is lower than the braking effect produced by at least one auxiliary brake device (12a) or by said auxiliary brake devices (12a).

6. Brake system (1) according to any of the Claims 1 to 5, **characterised in that** said front-wheel and rear-wheel brake devices (11, 12) are each adapted to be operated by means of a brake circuit (22, 23).

7. Brake system (1) according to any of the Claims 2 to 6, **characterised in that** said rear-wheel brake devices (12) and the respective auxiliary brake device (12a) are configured as spring-loaded brake actuators.

8. Motor vehicle, in particular truck, comprising a brake system (1) according to one or several of the Claims 1 to 7.

## Revendications

1. Système de freinage (1) pour un véhicule automobile, en particulier un camion, dans lequel un dispositif de frein (11, 12) respectif est affecté aux roues avant et arrière du véhicule automobile, **caractérisé en ce que** un seul des dispositifs de frein (11) de roue avant exclusivement renferme un dispositif de frein supplémentaire (26) et **en ce que** ledit dispositif de frein supplémentaire (26) est configuré sous forme d'un cylindre de frein à accumulateur.

2. Système de freinage (1) selon la revendication 1, **caractérisé en ce que** lesdits dispositifs de frein de roue arrière (12) comprennent au moins un dispositif de frein auxiliaire (12a).

3. Système de freinage (1) selon la revendication 2, **caractérisé en ce que** ledit dispositif de frein supplémentaire (26) et au moins un dispositif de frein auxiliaire (12a) se trouvent en communication opérationnelle l'un avec l'autre.

4. Système de freinage (1) selon la revendication 3, **caractérisé en ce que** ladite communication opérationnelle est configurée d'une telle manière, que l'effort de freinage engendré par ledit dispositif de frein supplémentaire (26) est opératif à un temps avant l'activité des efforts de freinage engendrés par lesdits dispositifs de frein auxiliaires (12a).

5. Système de freinage (1) selon la revendication 3 ou 4, **caractérisé en ce que** l'effort de freinage engendré par ledit dispositif de frein supplémentaire (26) est inférieur à l'effort de freinage engendré par au moins un dispositif de frein auxiliaire (12a) ou par lesdits dispositifs de frein auxiliaires (12a).

6. Système de freinage (1) selon une quelconque des revendications 1 à 5, **caractérisé en ce que** chacun desdits dispositifs de frein (11, 12) aux roues avant et aux roues arrière est apte à être commandé moyennant un circuit de frein (22, 23).

7. Système de freinage (1) selon une quelconque des revendications 2 à 6, **caractérisé en ce que** lesdits dispositifs de frein (12) de roue arrière et ledit dispositif de frein auxiliaire respectif (12a) sont configurés sous forme de cylindres de frein à accumulateur.

8. Véhicule automobile, en particulier camion, comprenant un système de freinage (1) selon une ou plusieurs des revendications 1 à 7.
